# EUROPEAN PATENT SPECIFICATION

(11) **EP 4 470 733 B1**
(45) Date of publication and mention of the grant of the patent: **07.10.2026**
(21) Application number: 23747374.9
(22) Date of filing: 27.01.2023
(51) Int. Cl.: B25J 15/10, B25J 15/12

(54) **SPIRAL LOOP-TYPE GRIPPER AND TRANSFER MEANS INCLUDING SAME**
SPIRALFÖRMIGER SCHLEIFENARTIGER GREIFER UND ÜBERTRAGUNGSMITTEL DAMIT
DISPOSITIF DE PRÉHENSION DE TYPE À BOUCLE EN SPIRALE ET MOYEN DE TRANSFERT LE COMPRENANT

(30) Priority: 27.01.2022 KR 20220012547
(43) Date of publication of application: 04.12.2024
(73) Proprietor: Korea Advanced Institute of Science and Technology, Daejeon 34141 (KR)
(72) Inventor: SONG, Kahye, Seoul 02792 (KR); KANG, Gyeongji, Seoul 02792 (KR); LEE, Dae-Young, Daejeon 34141 (KR)
(74) Representative: Kraus & Lederer PartGmbB
(86) International application number: PCT/KR2023/001252
(87) International publication number: WO 2023/146333

(56) References cited:
- WO-A1-2016/140712
- KR-A- 20160 031 189
- KR-A- 20200 123 321
- KR-B1- 101 444 344
- US-A1- 2007 239 141
- US-A1- 2018 235 187
- US-A1- 2019 030 711
- UPPALAPATI NAVEEN, KRISHNAN GIRISH: "Towards Pneumatic Spiral Grippers: Modeling and Design Considerations", SOFT ROBOTICS, vol. 5, no. 6, 7 December 2018 (2018-12-07), pages 695 - 709, XP009548033, ISSN: 2169-5172, DOI: 10.1089/soro.2017.0144

## Description

### TECHNICAL FIELD

The following disclosure relates to a gripper for gripping an object, an apparatus for conveyance with the gripper, and a gripping method, and more particularly, to a gripper gripping an object which may smoothly and stably lift a heavy object to prevent damage to the object, an apparatus for conveyance with the gripper, and a gripping method.

### BACKGROUND

In general, a gripper engaging an object and an apparatus for conveyance which may lift the object from its current location and convey or transport the object to a destination may be required in order to move a location of the object. A representative example of the apparatus for conveyance may be a robot arm, a conveyor, or a hydraulic system which may extend a stroke, and the apparatus for conveyance may grip the object with the gripper, lift the object, move the object to a desired location, and then put the object down at the destination.

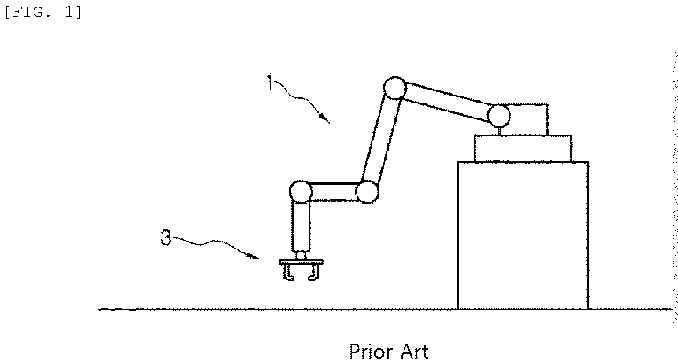

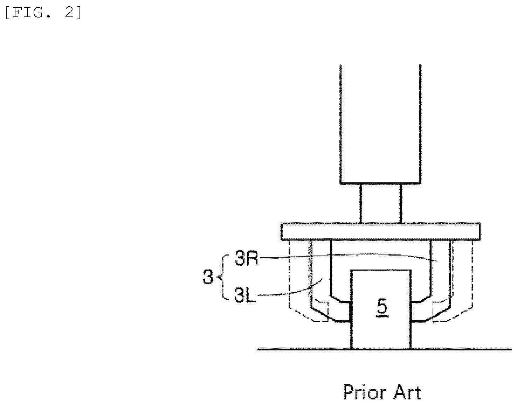

Referring to FIGS. 1 and 2, FIG. 1 is a conceptual diagram showing a gripper mounted on a distal end of a robot arm according to the prior art, and FIG. 2 is a conceptual diagram showing a relationship in which an object is pressed and then lifted by the gripper shown in FIG. 1. As shown in FIG. 1, a robot arm 1 may be designed to have a multi-joint structure to move an object 5 within a usable range of the robot arm 1. A gripper 3 may be mounted on a distal end of the robot arm 1, and the gripper 3 may press a side of the object 5 to grip the object 5.

In this case, a force (hereinafter referred to as 'grip force') exerted by the gripper 3 on the side of the object 5 is required to be greater than a load of the object 5. The reason is that it is required to prevent the object 5 from slipping off the gripper 3 when moved by an operation of the robot arm 1.

Therefore, it is necessary to select an appropriate gripper based on the weight or shape of the object and mount the selected gripper on the robot arm. However, when the objects respectively have irregular shapes or different weights, it may be difficult to select the appropriate gripper each time and then replace and mount the selected gripper on the robot arm.

In addition, an actuator may also be required to have proportionally increased capacity to generate a large grip force, and in this case, the actuator may also be generally required to have increased weight and volume. In the case where the actuator has the increased weight and volume, a payload may be increased when the gripper is mounted on the robot arm or the conveyor, which is the apparatus for conveyance, and the apparatus for conveyance may thus also be required to have the proportionally increased capacity.

In addition, FIG. 2 shows a process in which the gripper 3 grips the side of the object 5 having a vertical structure. However, a point where a left gripper 3L or a right gripper 3R comes into contact with the object 5 may be unstable when the object 5 has a concave or convex shape, the center of gravity of the object 5 may be changed in a process of lifting the object 5, and the object 5 may thus slip off.

It may be inefficient in that various types of grippers need to be provided to move such objects having various types or shapes, and the gripper thus needs to be replaced frequently depending on the object.

### Disclosure

### Technical Problem

Embodiments of the present disclosure are directed to providing a gripper gripping an object which may smoothly grip and stably lift a heavy object to prevent damage to the object in such a manner that the object is gripped using a plurality of spiral loops and lifted by a vertical drag force, an apparatus for conveyance with the gripper, and a gripping method.
A gripper according to the prior art is know from WO 2016/140712 A1.

### Technical Solution

In one general aspect, a gripper whose one end is connected to a first fixture and the other end is connected to a second fixture, includes a plurality of twisted loops each having a predetermined curvature, wherein the plurality of loops gather or spread to grip or release the object based on relative rotation of the first fixture and the second fixture.

The first fixture is a plate-shaped first plate, the second fixture is a plate-shaped second plate, one end of each of the plurality of loops are coupled to the first plate or extended from the first plate, and the other end of each of the plurality of loops are coupled to the second plate or extended from the second plate.

The first plate is formed by stacking the one end of each of the plurality of loops on top of each other, and the second plate is formed by stacking the other end of each of the plurality of loops on top of each other.

### Advantageous Effects

As set forth above, in the gripper according to an embodiment of the present disclosure, the loop part may be moved toward the axis line and enter the space between the object and the ground or under the lateral protrusion of the object when the first fixture and the second fixture are rotated relative to each other to grip the object located inside the spreading-out loops. The loops may then be twisted together, thus stably gripping the object as the gap between the loops becomes narrow.

In particular, the gripper may easily and stably grip even the atypical object as the loop part enters the space between the object and the ground or under the lateral protrusion of the object to grip the object.

In addition, the gripper according to the present disclosure may require a smaller force to press the object compared to the conventional gripper, thus preventing the object from being damaged because the loop enters the space between the object and the ground or under the lateral protrusion of the object to lift and convey the object while gripping the object.

In addition, the gripper according to the present disclosure may have a simple structure and a small weight, thus reducing the payload.

### BRIEF DESCRIPTION OF THE DRAWINGS

FIG. 1 is a conceptual diagram showing a gripper mounted on a distal end of a robot arm according to the prior art.
FIG. 2 is a conceptual diagram showing a relationship in which an object is pressed and then lifted by the gripper shown in FIG. 1.
FIG. 3 is a perspective view showing a gripper according to an embodiment of the present disclosure.
FIGS. 4 and 5 are views for explaining a process in which the gripper is closed to grip an object according to an embodiment of the present disclosure.
FIG. 6 is a photograph showing a state where the gripper grips the object according to an embodiment of the present disclosure.
FIG. 7 is a perspective view showing an example of shapes of a loop and a fixture in the present disclosure.
FIGS. 8A to 8D are conceptual diagrams of modifications of the present disclosure in which the number of loops is modified.
FIG. 9 is a conceptual diagram of a modification including the plurality of grippers having different sizes.
FIG. 10 is a perspective view showing another example of shapes of the loop and the fixture which is not t part of the claimed invention.
FIG. 11 is a plan view showing another example of the loop in the present disclosure.
FIGS. 12 to 13 are views each showing another example of the loop in the present disclosure.
FIG. 14 is a conceptual diagram showing an example in which the gripper is mounted on a robot arm according to the present disclosure.
FIG. 15 is a conceptual diagram showing another example in which the gripper is mounted on the robot arm according to the present disclosure.

### Best mode for Invention

A rotation shaft rotating the first plate or the second plate may be coupled to the first plate or the second plate.

A large gripper having a longer strap and a small gripper having a shorter strap may be disposed together.

The gripper may further include an intermediate plate disposed between the first plate and the second plate, one end of the large gripper may be connected to the first plate, and the other end of the large gripper may be connected to the intermediate plate, one end of the small gripper may be connected to the first plate, and the other end of the small gripper may be connected to the second plate, and the large gripper and the small gripper may be controlled based on the relative rotation of the first plate, the intermediate plate, and the second plate.

The intermediate plate and the second plate may be rotated together or separately rotated relative to each other.

The loop may be a strap having a predetermined elasticity.

The loop may have a predetermined width or a width gradually decreased or increased from one end to the other end, or a middle portion thereof may have a width greater or smaller than that of one end or the other end.

The loop may be an arc-shaped strap bent with the predetermined curvature.

The loop may include a reinforcing member formed therein and having greater rigidity than that of the strap.

In another general aspect, provided is a gripping method for gripping an object by using a loop-type gripper, wherein the gripper has one end connected to a first fixture and the other end connected to a second fixture, and includes a plurality of twisted loops each having a predetermined curvature, the plurality of loops gather together to grip the object when the first fixture and the second fixture are rotated relative to each other in one direction, and the plurality of loops each spread to release the object when the first fixture and the second fixture are rotated relative to each other in the other direction.

The relative rotation controls a spread degree of the plurality of loops based on a size of the object to be gripped, or a gathering degree of the plurality of loops based on a grip force for gripping the object.

The first fixture is a plate-shaped first plate, the second fixture is a plate-shaped second plate, one end of each of the plurality of loops are coupled to the first plate or extended from the first plate, and the other end of each of the plurality of loops are coupled to the second plate or extended from the second plate plate.

In still another general aspect, an apparatus for conveyance for conveying an object comprises the gripper as described above mounted on a distal end of the apparatus for conveyance and a motor rotating the first fixture or second fixture of the gripper.

The apparatus for conveyance may further include a rotation shaft connected to the motor and rotating the first plate or the second plate.

### Mode for Invention

Specific embodiments and features of the present disclosure are described in detail with reference to the accompanying drawings. However, the present disclosure is not limited to these specific embodiments and drawings, and may be implemented in various different forms. These embodiments are provided only to make the present disclosure complete and allow those skilled in the art to completely appreciate the scope of the present disclosure, and the present disclosure is defined by the scope of the claims. Throughout the specification, the same reference numerals denote the same components.

In describing the embodiments of the present disclosure, omitted is a detailed description of a case where it is decided that the detailed description of the known functions or configurations related to the present disclosure may unnecessarily obscure the gist of the present disclosure. In addition, terms used herein are defined in consideration of their functions in the embodiments of the present disclosure, and may be construed in different ways by intentions of users or operators, practices, or the like. Therefore, the terms should be defined on the basis of the contents throughout the specification.

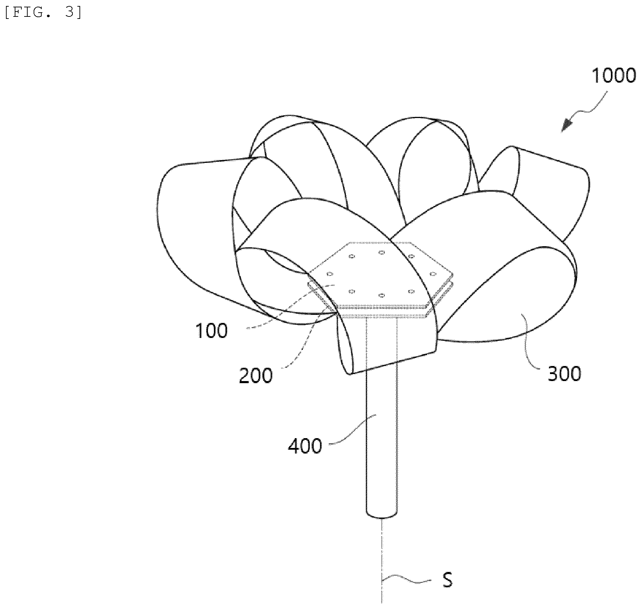

FIG. 3 is a perspective view showing a gripper according to an embodiment of the present disclosure. Referring to FIG. 3, the gripper according to the present disclosure may have one end connected to a first fixture 100 and the other end connected to a second fixture 200, and may include a plurality of twisted loops 300 each having a predetermined curvature. The plurality of loops 300 may gather together or spread out to grip or release an object based on relative rotation of the first fixture 100 and the second fixture 200. Here, the middle portion of the loop 300 may be bent with the predetermined curvature as the first fixture 100 and the second fixture 200 are disposed to be adjacent to each other; the curvature of the middle portion of the loop 300 may be changed and the loop 300 may thus be twisted or untwisted, when the first fixture 100 and the second fixture 200 are rotated relative to each other; and accordingly, the object may be gripped or released from the grip.

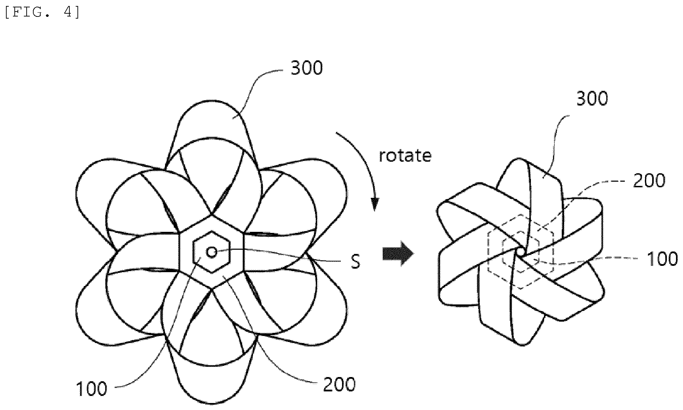

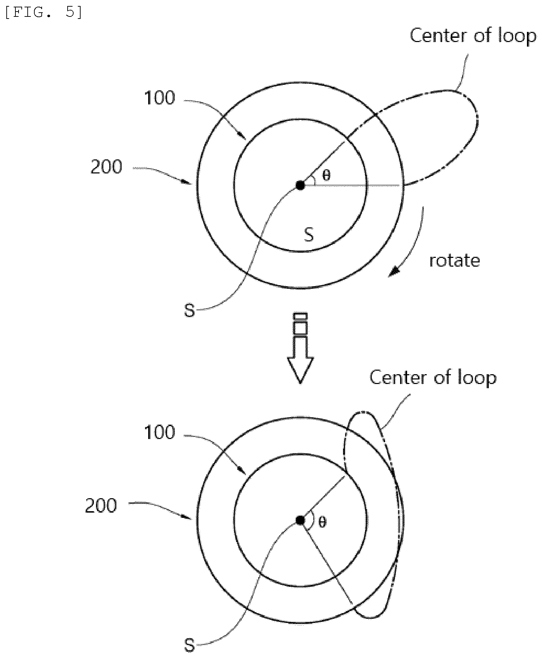

FIGS. 4 and 5 are views for explaining a process in which the gripper is closed to grip the object according to an embodiment of the present disclosure. Referring to FIGS. 4 and 5, the plurality of loops 300 may be twisted and gather together in a case where the relative rotation is performed in the gripper according to the present disclosure, i.e., when the second fixture 200 is rotated while the first fixture 100 is fixed, or the first fixture 100 is rotated while the second fixture 200 is fixed. The loops 300 may then be moved toward an axis line S to enter a space between the object and the ground or under a lateral protrusion of the object. The loops 300 may then be twisted together, thus gripping the object as a gap between the loops 300 becomes narrow.

In more detail, in the gripper according to the present disclosure, an angle θ between both ends of the loops 300 and a rotation shaft 400 may be increased or decreased as the first fixture 100 and the second fixture 200 are rotated relative to each other. Accordingly, the longitudinal center of the loop 300 may become closer to or farther away from the axis line S. A process of gripping the object by using the gripper configured in this way may be performed as follows: The loops 300 may grip the object 5 as the loops 300 gather together toward the axis line S and enter the space between the object 5 and the ground or under the protrusion of the object 5. On the other hand, the object may be released from the grip as the loops 300 spread out by being moved outward under the object 5 while being farther away from the axis line S.

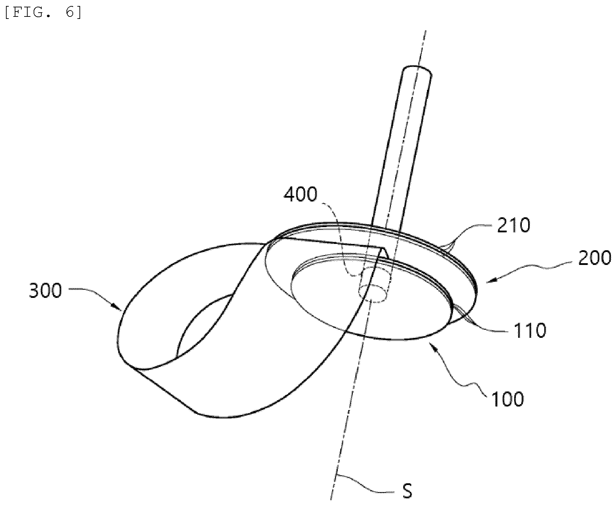

FIG. 6 is a photograph showing a state where the gripper grips the object according to an embodiment of the present disclosure. It may be seen that transparent portions in the photograph are the loops 300 of the present disclosure, and the plurality of loops 300 may stably grip the object while being twisted together.

The process of gripping the object 5 by the relative rotation of the first fixture 100 and the second fixture 200 may be described in more detail as follows: The loops may stably grip the object 5 as a strap 330 is moved toward the axis line S to enter the space between the object 5 and the ground or under the lateral protrusion of the object 5, and then twisted and tightened. In particular, the gripper according to the present disclosure may easily and stably grip even an atypical object whose shape is not specified as the thin strap 330 enters the space between the object 5 and the ground or under the lateral protrusion of the object to grip the object.

The photograph of FIG. 6 shows the loop 300 made of a transparent material to effectively show the gripped object. However, the loop 300 may be made of various materials and shapes such as metal, synthetic resin, fiber, rubber, and paper, each of which is flexible and has a predetermined elasticity. A structure of the loop 300 is described in more detail below.

According to a gripping method for gripping an object by using a loop-type gripper 1000 of the present disclosure, the plurality of loops 300 may gather together to grip the object when the first fixture 100 and the second fixture 200 are rotated relative to each other in one direction as described above, and the plurality of loops 300 may each spread out to release the object when the first fixture 100 and the second fixture 200 are rotated relative to each other in the other direction.

Here, the relative rotation may be performed to control a spread degree of the plurality of loops 300 based on a size of the object to be gripped, and the relative rotation is performed to control a gathering degree of the plurality of loops 300 based on a grip force for gripping the object.

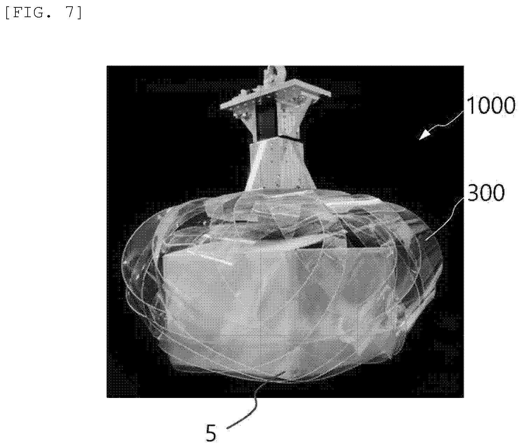

FIG. 7 is a perspective view showing an example of shapes of the loop 300 and the fixture in the present disclosure. In an example of FIG. 7, the first fixture 100 may be a plate-shaped first plate 110, the second fixture 200 may be a plate-shaped second plate 210, and one end 310 of each of the plurality of loops may be coupled to the first plate 110 or extended from the first plate 110, and the other end 320 of each of the plurality of loops may be coupled to the second plate 210 or extended from the second plate 210. That is, the gripper may include the first plate 110 and the second plate 210 rotated relative to each other, and the plurality of loops whose both ends are respectively extended or connected to the first plate 110 and the second plate 210, and the rotation shaft 400 rotating the first plate 110 or the second plate 210.

Here, the first plate 110 or the second plate 210 may be formed by stacking one end 310 or other end 320 of each of the plurality of loops on top of each other. In this case, one end 310 or the other end 320 of the stacked loops without a separate plate may serve as a plate. In more detail, the loop 300 may have the belt-shaped strap 330, one end 310 of the loop that is formed at one end of the strap 330, and the other end 320 of the loop that is formed at the other end of the strap 330, which are integrally formed with one another. Here, one end 310 of each of the plurality of loops 300 may be stacked on top of each other or the other end 320 of each of the loops may be stacked on top of each other in a regular pattern, and the first plate 110 may then be formed by fixing the stacked one end 310 of each of the loops on top of each other, and the second plate 210 may be formed by fixing the stacked other end 320 of each of the loops on top of each other.

Alternatively, the first plate 110, the second plate 210, and the loop part 300 may be separately configured from one another, and then also configured in such a way that one end of the loop 300 is fixedly connected to the first plate 110 and the other end of the loop 300 is fixedly connected to the second plate 210.

In addition, in configuring the first plate 110 and the second plate 210 to be rotated relative to each other, a shaft hole may be formed in the center of the first plate 110, and the rotation shaft 400 fixed to the center of the second plate 210 may pass through the shaft hole.

Hereinafter, the description describes a method of stacking the loops 300. Referring to FIGS. 3 and 4, the gripper in an embodiment may include six loops 300, and in stacking the six loops 300, the loop stacked on the lowest layer may be referred to as a first loop, and the loops stacked thereon may be sequentially referred to as second to the sixth loops. In this case, the straps may be arranged for each of two ends of each strap to have an equal angle (e.g., 60 degrees), and for each plane of one end of each of the stacked loops to face upward while one end of each of the loops of the first to sixth loops are stacked and fixed by locating one end of loop of the second loop on top of one end of the loop of the first loop.

The other end of each of the loops from the first to sixth loops may then also be sequentially stacked, and the assembled second plate 210 may be located on the first plate 110. As the second plate 210 is located on the first plate 110 in this way, the strap 330 may have a curvature, and the angle between each of the two ends of each strap 330 and the axis line S (e.g., 60 degrees) may be the same for all the six loops 300.

Meanwhile, one ends 310 and the other end 320 of each of the stacked loops may be disposed to face the same direction. However, when the stacked one ends 310 and the other end 320 of each of the loops are disposed to face opposite directions, the strap 330 may have a 180-degree twisted structure, through which a grip angle of the object, the grip force, or the like may also be adjusted.

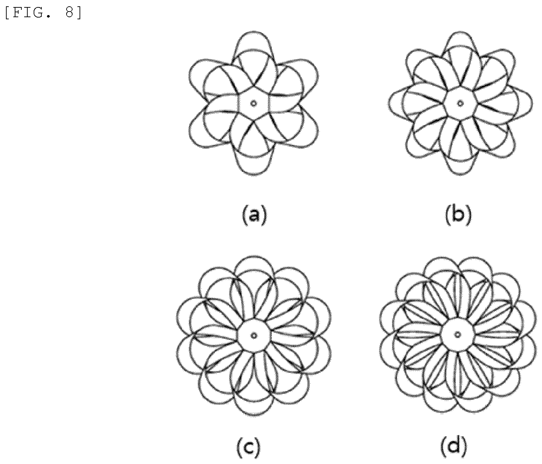

FIGS. 8A to 8D are conceptual diagrams of various modifications in which the number of loops 300 is modified. The description describes the gripper above includes six loops 300 assembled to each other. However, more or fewer loops 300 of the gripper may be configured based on the size and weight of the object 5, and the angle θ may be changed based on the number of loops 300. The minimum number of loops 300 may be two. However, as shown in FIGS. 8A to 8D, various types of grippers may be configured by changing the number of spiral loops 300 or the width of the strap 330. FIG. 8A shows the gripper with six loops 300, FIG. 8B shows the gripper with eight loops 300, FIG. 8C shows the gripper with ten loops 300, and FIG. 8D shows the gripper with twelve loops 300.

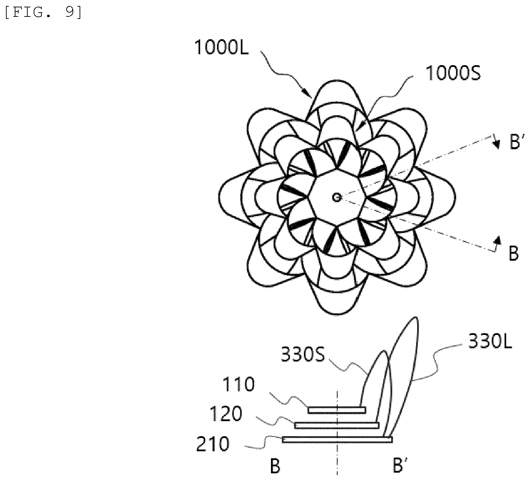

FIG. 9 is a conceptual diagram of a modification including the plurality of grippers having different sizes. Referring to FIG. 9, the grippers of different sizes may be simultaneously mounted by installing a small gripper 1000S inside a large gripper 1000L. In this case, the small gripper 1000S having a shorter strap 330S may be disposed inside the large gripper 1000L having a longer strap 330L.

The lower drawing in FIG. 9 may be provided to schematically explain a disposition relationship between the large gripper 1000L and the small gripper 1000S along B-B'. An intermediate plate 120 may be disposed between the first plate 110 and the second plate 210.

In this case, one end 310 of the loop of the large gripper 1000L having the long strap 330L may be coupled to the first plate 110, and the other end 320 of the loop of the large gripper 1000L may be coupled to the intermediate plate 120. Meanwhile, one end 310 of the loop of the small gripper 1000S having the short strap 330S may be coupled to the first plate 110, and the other end 320 of the loop of the small gripper 1000S may be coupled to the second plate 210.

That is, grip conditions of the large gripper 1000L and small gripper 1000S may be controlled based on the relative rotation of the first plate 110, the intermediate plate 120, and the second plate while one end of the large gripper 1000L and one end of the small gripper 1000S are coupled together to the first plate 110.

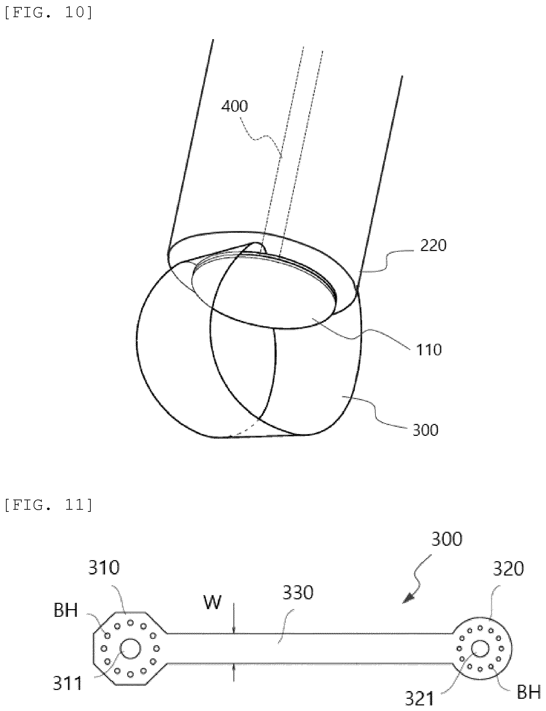

FIG. 10 is a perspective view showing another example of shapes of the loop 300 and the fixture 100 or 200 which is not part of the claimed invention. Referring to FIG. 10, the first fixture 100 may be a plate-shaped first plate 110, and the second fixture 200 may be a cylindrical cylinder 220. That is, the other end 320 of the loop may be coupled to the inner or outer circumference of the cylindrical cylinder 220 or extended from one end of the cylindrical cylinder 220.

Here, the relative rotation may be performed at both the ends of the loop 300 when the rotation shaft 400 is coupled to the first plate 110 to rotate the first plate 110, through which the object may be gripped or released from the grip. Although not shown in the drawings, the object may be gripped or released from the grip by performing the relative rotation at both the ends of the loop 300 even when the first plate 110 is fixed and the cylindrical cylinder 220 is rotated.

FIG. 11 is a plan view showing another example of the loop 300 in the present disclosure. As described above, the loop 300 of the present disclosure may include the belt-shaped strap 330, one end 310 of the loop that is formed at one end of the strap 330, and the other end 320 of the loop that is formed at the other end of the strap 330. One end 310 of the loop and the other end 320 of the loop may each be a portion for fixing the strap 330 to the first fixture 100 or the second fixture 200, and have a polygonal or circular shape, and one end 310 of the loop and the other end 320 of the loop may each also have an area configured in various ways.

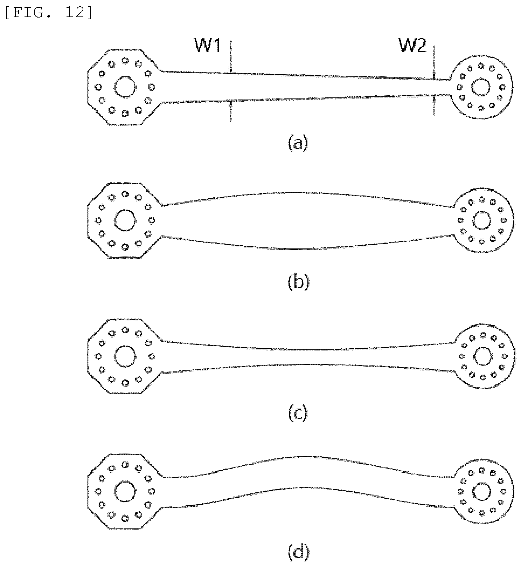

In addition, the strap 330 may be made of a material having a predetermined elasticity, and required to be able to change its curvature or twist degree based on the relative rotation of the first fixture 100 and the second fixture 200. The overall length of the strap 330 may be a predetermined width W, or the width and shape of the strap 330 may be variously modified as shown in FIG. 12.

Shaft holes 311 and 321 may respectively be formed in the center of one end 310 of the loop and that of the other end 320 of the loop, and bolt holes BH may be formed along the circumference of each shaft hole. The bolt holes BH in one end 310 of each of the stacked loops may communicate with each other, and the first plate 110 may be formed by fastening nuts to bolts passing through the bolt holes BH. In the case of the other end 320 of each of the loops, the second plate 210 may also be formed by fastening nuts to bolts passing through the bolt holes BH of the other end of each of the stacked loops 320. Alternatively, one end 310 of each of the stacked loops and the other end 320 of each of the loops may be attached and fixed to each other through adhesive and heat fusion.

FIGS. 12A to 13 are views each showing another example of the loop 300 in the present disclosure. Referring to FIG. 12A to 12D, the strap 330 may have a width changed from one end 310 of the loop to the other end 320 of the loop. That is, the strap 330 may have a width gradually decreased from one end to the other end (W1→W2) as shown in FIG. 12A, a middle portion of the strap 330 may have a width greater than that of one end 310 or the other end of the loop as shown in FIG. 12B, or the middle portion of the strap 330 may have a width smaller than that of one end 310 or the other end of the loop as shown in FIG. 12C. Alternatively, the strap 330 may be bent with the predetermined curvature as shown in FIG. 12D.

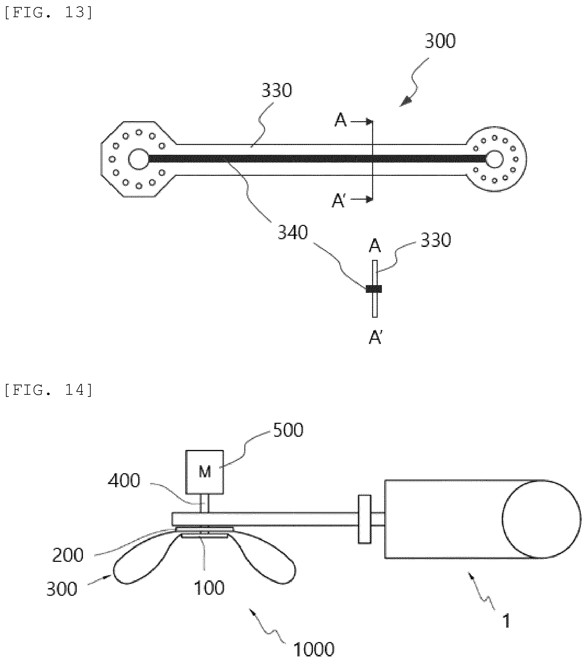

FIG. 13 is a view showing another modification of the loop 300. Referring to FIG. 13, the loop 300 may include a reinforcing member 340 formed therein and having greater rigidity than that of the strap 330. That is, as shown in a cross-sectional view of A-A' in FIG. 13, the strap 330 may have a thin thickness by making the reinforcing member 340 located in the center of the strap 330 have the greater rigidity than that of the surrounding strap 330. In this way, it is possible to improve grip ability of the gripper by maintaining the overall rigidity of the strap 330 while making it easier for the gripper to be closer to the object for the grip.

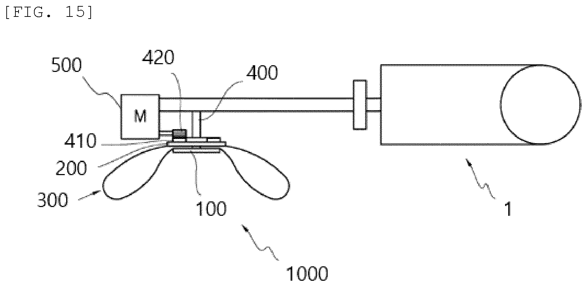

FIG. 14 is a conceptual diagram showing an example in which the gripper is mounted on a robot arm according to the present disclosure, and FIG. 15 is a conceptual diagram showing another example in which the gripper is mounted on the robot arm according to the present disclosure.

As shown in FIG. 14, in the gripper, the rotation shaft 400 may pass through the first plate 110 while the rotation shaft 400 is fixed to the center of the second plate 210. In this case, the second plate 210 may be rotated and the first plate 110 may be fixed to a distal end of a robot arm 1, the rotation shaft 400 may be rotated by a motor 500 mounted on the robot arm 1, and the gripper may grip or release the object 5 as the second plate 210 is rotated by the rotation of the rotation shaft 400.

Therefore, the robot arm 1, which is an apparatus for conveyance, may operate and lift the object 5 while the loops 300 of the gripper enter under the object 5 to grip the object 5. Here, the object 5 may be lifted by a vertical drag force while spanning the loops 300. In this state, the object may be conveyed to a destination by the robot arm 1. The loops 300 may then spread out under the object 5 toward the outside of the object 5 when the first plate 110 and the second plate 210 are rotated relative to each other in the opposite directions, thereby releasing the object 5 from the grip.

On the other hand, in the gripper shown in FIG. 15, the rotation shaft 400 fixed to the second plate 210 may pass through the first plate 110 to be fixed to the distal end of the robot arm 1, and a pinion 420 mounted on the robot arm 1 may be coupled to a rack 410 fixed to the circumference of an upper surface of the first plate 110. In this state, the first plate 110 may be rotated while the rack 410 is moved as the pinion 420 is driven.

FIGS. 14 and 15 conceptually show examples in each of which the gripper is installed on the robot arm 1 to explain an operational relationship of the gripper based on the relative rotation of the first plate 110 and the second plate 210 of the gripper according to the present disclosure, and the apparatus for conveyance is not limited to the robot arm 1. In addition, it is apparent that a driving method to configure the relative rotation of the first plate 110 and the second plate 210 may be variously changed, and the driving method of the first plate 110 and the second plate 210 is not limited to the configurations shown in FIGS. 14 and 15.

### [Description of Reference Numerals]

1: Robot arm 5: object
1000: gripper
1000L: large gripper 1000S: small gripper
100: first fixture
110: first plate 111: shaft hole
120: intermediate plate
200: second fixture
210: second plate 211: shaft hole
220: cylindrical cylinder
300: loop
310: one end of the loop 320: the other end of the loop
330: strap
330S: shorter strap 330L: longer strap
340: einforcing member
400: rotation shaft
410: rack 420: pinion
   500: motor
   S: axis line θ: angle
   BH: bolt hole

### Industrial applicability

the present disclosure relates to a gripper for holding an object and a transport means including the same, and therefore has industrial applicability.

## Claims

1. A gripper for gripping an object, the gripper whose one end is connected to a first fixture (100) and the other end is connected to a second fixture (200), comprising a plurality of twisted loops (300) each having a predetermined curvature,
the plurality of loops (300) gather together or spread out to grip or release the object based on relative rotation of the first fixture (100) and the second fixture (200),
**characterized in that**
the first fixture (100) is a plate-shaped first plate (110) (110),
the second fixture (200) is a plate-shaped second plate (210),
one end of each of the plurality of loops (300) are coupled to the first plate (110) or extended from the first plate (110), and
the other end of each of the plurality of loops (300) are coupled to the second plate (210) or extended from the second plate (210),
wherein the first plate (110) is formed by stacking the one end of each of the plurality of loops (300) on top of each other, and
the second plate (210) is formed by stacking the other end of each of the plurality of loops (300) on top of each other.

2. The gripper of claim 1, wherein a rotation shaft rotating the first plate (110) or the second plate (210) is coupled to the first plate (110) or the second plate (210).

3. The gripper of claim 1, wherein a large gripper having a longer strap and a small gripper having a shorter strap are disposed together.

4. The gripper of claim 3, further comprising an intermediate plate (120) disposed between the first plate (110) and the second plate (210),
one end of the large gripper is connected to the first plate (110), and the other end of the large gripper is connected to the intermediate plate (120),
one end of the small gripper is connected to the first plate (110), and the other end of the small gripper is connected to the second plate (210), and
the large gripper and the small gripper are controlled based on the relative rotation of the first plate (110), the intermediate plate (120), and the second plate (210).

5. The gripper of claim 1, wherein the loop is a strap having a predetermined elasticity.

6. The gripper of claim 5, wherein the loop has a predetermined width or a width gradually decreased or increased from one end to the other end, or a middle portion thereof has a width greater or smaller than that of one end or the other end.

7. The gripper of claim 4, wherein the loop is an arc-shaped strap bent with the predetermined curvature.

8. The gripper of claim 4, wherein the loop includes a reinforcing member formed therein and having greater rigidity than that of the strap.

9. A gripping method for gripping an object by using a loop-type gripper, wherein the gripper has one end connected to a first fixture (100) and the other end connected to a second fixture (200), and includes a plurality of twisted loops (300) each having a predetermined curvature,
the plurality of loops gather together to grip the object when the first fixture (100) and the second fixture (200) are rotated relative to each other in one direction, and
the plurality of loops (300) each spread out to release the object when the first fixture (100) and the second fixture (200) are rotated relative to each other in the other direction, wherein the relative rotation controls
a spread degree of the plurality of loops (300) based on a size of the object to be gripped, or a gathering degree of the plurality of loops (300) based on a grip force for gripping the object wherein the first fixture (100) is a plate-shaped first plate (110),
the second fixture (200) is a plate-shaped second plate (210),
one end of each of the plurality of loops (300) are coupled to the first plate (110) or extended from the first plate (110), and
the other end of each of the plurality of loops (300) are coupled to the second plate (210) or extended from the second plate (210).

10. An apparatus for conveyance for conveying an object, the apparatus for conveyance comprising:
the gripper according to claim 1 mounted on a distal end of the apparatus for conveyance, and
a motor rotating the first fixture (100) or second fixture (200) of the gripper.

11. The apparatus for conveyance of claim 10, further comprising a rotation shaft connected to the motor and rotating the first plate (110) or the second plate (210).

## Patentansprüche

1. Greifer zum Greifen eines Objekts, wobei der Greifer an einem Ende mit einer ersten Halterung (100) und am anderen Ende mit einer zweiten Halterung (200) verbunden ist, umfassend eine Vielzahl von verdrillten Schlaufen (300), die jeweils eine vorbestimmte Krümmung aufweisen, wobei sich die Vielzahl von Schlaufen (300) je nach der relativen Drehung der ersten Halterung (100) und der zweiten Halterung (200) zusammenziehen oder ausbreiten, um das Objekt zu greifen oder loszulassen, **dadurch gekennzeichnet, dass**
die erste Halterung (100) eine plattenförmige erste Platte (110) (110) ist,
die zweite Halterung (200) ist eine plattenförmige zweite Platte (210) ist,
ein Ende jeder der Vielzahl von Schlaufen (300) mit der ersten Platte (110) verbunden ist oder sich von der ersten Platte (110) aus erstreckt, und
das andere Ende jeder der Vielzahl von Schlaufen (300) mit der zweiten Platte (210) verbunden ist oder sich von der zweiten Platte (210) aus erstreckt,
wobei die erste Platte (110) dadurch gebildet wird, dass das eine Ende jeder der Vielzahl von Schlaufen (300) übereinandergestapelt wird, und
die zweite Platte (210) dadurch gebildet wird, dass das jeweils andere Ende jeder der Vielzahl von Schlaufen (300) übereinandergestapelt wird.

2. Greifer nach Anspruch 1, wobei eine Drehwelle, die die erste Platte (110) oder die zweite Platte (210) dreht, mit der ersten Platte (110) oder der zweiten Platte (210) verbunden ist.

3. Greifer nach Anspruch 1, wobei ein großer Greifer mit einem längeren Riemen und ein kleiner Greifer mit einem kürzeren Riemen gemeinsam angeordnet sind.

4. Greifer nach Anspruch 3, ferner umfassend eine Zwischenplatte (120), die zwischen der ersten Platte (110) und der zweiten Platte (210) angeordnet ist,
wobei ein Ende des großen Greifers mit der ersten Platte (110) verbunden ist und das andere Ende des großen Greifers mit der Zwischenplatte (120) verbunden ist,
wobei ein Ende des kleinen Greifers mit der ersten Platte (110) verbunden ist und das andere Ende des kleinen Greifers mit der zweiten Platte (210) verbunden ist, und
der große Greifer und der kleine Greifer basierend auf der relativen Drehung der ersten Platte (110), der Zwischenplatte (120) und der zweiten Platte (210) gesteuert werden.

5. Greifer nach Anspruch 1, wobei die Schlaufe ein Riemen mit einer vorbestimmten Elastizität ist.

6. Greifer nach Anspruch 5, wobei die Schlaufe eine vorbestimmte Breite aufweist oder eine Breite, die von einem Ende zum anderen Ende hin allmählich abnimmt oder zunimmt, oder wobei ein mittlerer Abschnitt davon eine Breite aufweist, die größer oder kleiner ist als die des einen Endes oder des anderen Endes.

7. Greifer nach Anspruch 4, wobei die Schlaufe ein bogenförmiger Riemen ist, der mit der vorbestimmten Krümmung gebogen ist.

8. Greifer nach Anspruch 4, wobei die Schlaufe ein darin ausgebildetes Verstärkungselement aufweist, das eine größere Steifigkeit als der Riemen aufweist.

9. Greifverfahren zum Greifen eines Objekts unter Verwendung eines schlaufenförmigen Greifers, wobei der Greifer mit einem Ende an einer ersten Halterung (100) und mit dem anderen Ende an einer zweiten Halterung (200) befestigt ist und eine Vielzahl von verdrillten Schlaufen (300) umfasst, die jeweils eine vorbestimmte Krümmung aufweisen,
wobei sich die Vielzahl von Schlaufen zusammenziehen, um das Objekt zu greifen, wenn die erste Halterung (100) und die zweite Halterung (200) relativ zueinander in eine Richtung gedreht werden, und
sich die Vielzahl von Schlaufen (300) jeweils ausbreiten, um das Objekt freizugeben, wenn die erste Halterung (100) und die zweite Halterung (200) relativ zueinander in die andere Richtung gedreht werden,
wobei die relative Drehung
einen Spreizgrad der Vielzahl von Schlaufen (300) basierend auf einer Größe des zu greifenden Objekts oder
einen Zusammenzugsgrad der Vielzahl von Schlaufen (300) basierend auf einer Greifkraft zum Greifen des Objekts steuert,
wobei die erste Halterung (100) eine plattenförmige erste Platte (110) ist,
die zweite Halterung (200) ist eine plattenförmige zweite Platte (210) ist,
ein Ende jeder der Vielzahl von Schlaufen (300) mit der ersten Platte (110) verbunden ist oder sich von der ersten Platte (110) aus erstreckt, und
das andere Ende jeder der Vielzahl von Schlaufen (300) mit der zweiten Platte (210) verbunden ist oder sich von der zweiten Platte (210) aus erstreckt.

10. Fördereinrichtung zum Fördern eines Objekts, wobei die Fördereinrichtung umfasst:
den Greifer nach Anspruch 1, der an einem distalen Ende der Fördereinrichtung angebracht ist, und
einen Motor, der die erste Halterung (100) oder die zweite Halterung (200) des Greifers dreht.

11. Fördereinrichtung nach Anspruch 10, ferner umfassend eine mit dem Motor verbundene Drehwelle, die die erste Platte (110) oder die zweite Platte (210) dreht.

## Revendications

1. Dispositif de préhension pour la préhension d'un objet, dont une extrémité du dispositif de préhension est reliée à un premier accessoire (100) et l'autre extrémité est reliée à un second accessoire (200), comprenant une pluralité de boucles torsadées (300) ayant chacune une courbure prédéterminée, la pluralité de boucles (300) se rassemblent ou s'écartent pour saisir ou libérer l'objet sur la base d'une rotation relative du premier accessoire (100) et du second accessoire (200), **caractérisé en ce que**
le premier accessoire (100) est une première plaque (110) en forme de plaque,
le second accessoire (200) est une seconde plaque (210) en forme de plaque,
une extrémité de chacune de la pluralité de boucles (300) sont couplées à la première plaque (110) ou s'étendent à partir de la première plaque (110), et
l'autre extrémité de chacune de la pluralité de boucles (300) sont couplées à la seconde plaque (210) ou s'étendent à partir de la seconde plaque (210),
dans lequel la première plaque (110) est formée par l'empilement de l'une extrémité de chacune de la pluralité de boucles (300) les unes sur les autres, et
la seconde plaque (210) est formée par l'empilement de l'autre extrémité de chacune de la pluralité de boucles (300) les unes sur les autres.

2. Dispositif de préhension selon la revendication 1, dans lequel un arbre de rotation mettant en rotation la première plaque (110) ou la seconde plaque (210) est couplé à la première plaque (110) ou à la seconde plaque (210).

3. Dispositif de préhension selon la revendication 1, dans lequel un grand dispositif de préhension ayant une sangle plus longue et un petit dispositif de préhension ayant une sangle plus courte sont disposés ensemble.

4. Dispositif de préhension selon la revendication 3, comprenant en outre une plaque intermédiaire (120) disposée entre la première plaque (110) et la seconde plaque (210),
une extrémité du grand dispositif de préhension est reliée à la première plaque (110), et l'autre extrémité du grand dispositif de préhension est reliée à la plaque intermédiaire (120),
une extrémité du petit dispositif de préhension est reliée à la première plaque (110), et l'autre extrémité du petit dispositif de préhension est reliée à la seconde plaque (210),
le grand dispositif de préhension et le petit dispositif de préhension sont commandés sur la base de la rotation relative de la première plaque (110), de la plaque intermédiaire (120) et de la seconde plaque (210).

5. Dispositif de préhension selon la revendication 1, dans lequel la boucle est une sangle ayant une élasticité prédéterminée.

6. Dispositif de préhension selon la revendication 5, dans lequel la boucle possède une largeur prédéterminée ou une largeur qui diminue ou augmente progressivement d'une extrémité à l'autre extrémité, ou une partie médiane de celle-ci possède une largeur plus grande ou plus petite que celle d'une extrémité ou de l'autre extrémité.

7. Dispositif de préhension selon la revendication 4, dans lequel la boucle est une sangle de forme arquée pliée selon la courbure prédéterminée.

8. Dispositif de préhension selon la revendication 4, dans lequel la boucle inclut un élément de renfort formé en son sein et ayant une plus grande rigidité que celle de la sangle.

9. Procédé de préhension pour la préhension d'un objet en utilisant un dispositif de préhension de type à boucles, dans lequel le dispositif de préhension possède une extrémité reliée à un premier accessoire (100) et l'autre extrémité reliée à un second accessoire (200), et inclut une pluralité de boucles torsadées (300) ayant chacune une courbure prédéterminée,
la pluralité de boucles se rassemblent pour saisir l'objet lorsque le premier accessoire (100) et le second accessoire (200) sont mis en rotation l'un par rapport à l'autre dans une direction, et
la pluralité de boucles (300) s'écartent pour libérer l'objet lorsque le premier accessoire (100) et le second accessoire (200) sont mis en rotation l'un par rapport à l'autre dans l'autre direction,
dans lequel la rotation relative commande
un degré d'écartement de la pluralité de boucles (300) sur la base d'une taille de l'objet à saisir, ou
un degré de rassemblement de la pluralité de boucles (300) sur la base d'une force de préhension pour la préhension de l'objet
dans lequel le premier accessoire (100) est une première plaque (110) en forme de plaque,
le second accessoire (200) est une seconde plaque (210) en forme de plaque,
une extrémité de chacune de la pluralité de boucles (300) sont couplées à la première plaque (110) ou s'étendent à partir de la première plaque (110), et
l'autre extrémité de chacune de la pluralité de boucles (300) sont couplées à la seconde plaque (210) ou s'étendent à partir de la seconde plaque (210).

10. Appareil de transport pour le transport d'un objet, l'appareil de transport comprenant :
le dispositif de préhension selon la revendication 1 monté sur une extrémité distale de l'appareil de transport, et
un moteur mettant en rotation le premier accessoire (100) ou le second accessoire (200) du dispositif de préhension.

11. Appareil de transport selon la revendication 10, comprenant en outre un arbre de rotation relié au moteur et mettant en rotation la première plaque (110) ou la seconde plaque (210).
